Europäisches Patentamt

European Patent Office

Office européen des brevets

(19)

(11) EP 0 727 010 B1

(12) **FASCICULE DE BREVET EUROPEEN**

(45) Date de publication et mention
de la délivrance du brevet:
**10.06.1998 Bulletin 1998/24**

(21) Numéro de dépôt: **94931555.0**

(22) Date de dépôt: **02.11.1994**

(51) Int Cl.⁶: **F01L 9/02**, F01L 13/02

(86) Numéro de dépôt international:
**PCT/EP94/03606**

(87) Numéro de publication internationale:
**WO 95/12751 (11.05.1995 Gazette 1995/20)**

(54) **PROCEDE ET DISPOSITIF DE COMMANDE DE LA LEVEE D'UNE SOUPAPE D'UN MOTEUR A COMBUSTION INTERNE**

VERFAHREN UND VORRICHTUNG ZUR STEUERUNG DES HUBES EINES VENTILS EINER BRENNKRAFTMASCHINE

METHOD AND DEVICE FOR CONTROLLING THE LIFTING OF A VALVE OF AN INTERNAL COMBUSTION ENGINE

(84) Etats contractants désignés:
**DE ES GB IT**

(30) Priorité: **05.11.1993 FR 9313186**

(43) Date de publication de la demande:
**21.08.1996 Bulletin 1996/34**

(73) Titulaire: **SIEMENS AUTOMOTIVE S.A.**
**31036 Toulouse Cédex (FR)**

(72) Inventeur: **JANSE VAN VUUREN,**
**Willem-Nicolaas**
**F-3100 Toulouse (FR)**

(74) Mandataire: **Fuchs, Franz-Josef, Dr.-Ing. et al**
**Postfach 22 13 17**
**80503 München (DE)**

(56) Documents cités:
EP-A- 0 446 065      WO-A-92/07172
FR-A- 2 133 288      GB-A- 2 197 908
US-A- 4 724 810      US-A- 5 193 494

## Description

La présente invention est relative à un procédé de commande de la levée d'une soupape d'un cylindre de moteur à combustion interne et, plus particulièrement, à un tel procédé permettant de faire varier le temps d'ouverture d'une telle soupape par la commande du déclenchement "d'événements" concernant cette soupape. La présente invention a aussi pour but de fournir un dispositif pour la mise en oeuvre de ce procédé.

Classiquement la "levée" d'une soupape, d'admission ou d'échappement, est commandée par une came solidaire du vilebrequin du moteur ou d'un arbre à cames tournant en synchronisme avec ce dernier. La liaison mécanique établie entre chaque soupape et la came de commande associées est desmodromique et ainsi les "événements" que constituent l'ouverture ou la fermeture de la soupape interviennent à des moments prédéterminés et invariables du cycle de fonctionnement du moteur, ou "cycle moteur".

On envisage aujourd'hui de faire intervenir ces événements de manière variable et commandée, pour régler par exemple la quantité d'air ou de mélange air/carburant aspirée par un cylindre du moteur, ou bien la quantité de gaz d'échappement retenue dans ce cylindre, comme cela est par exemple décrit dans le brevet français n° 2 133 288.

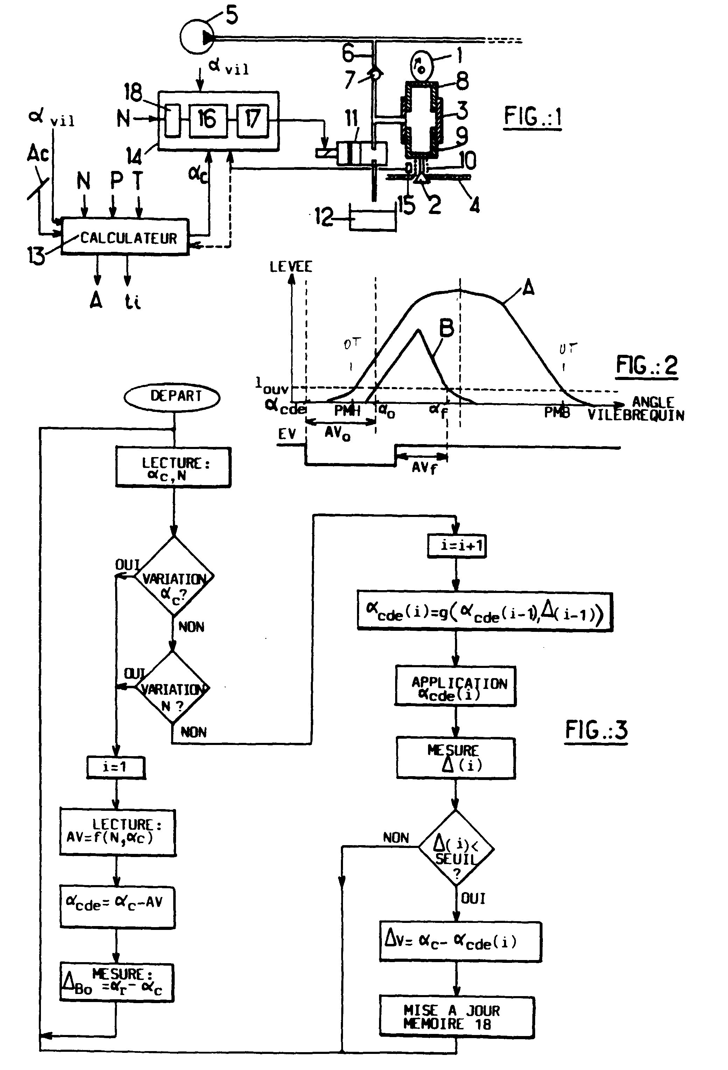

Ceci suppose que l'on dispose de moyens permettant de commander avec toute la souplesse nécessaire la "levée" des soupapes, souplesse absente des mécanismes à cames classiques. Pour ce faire on a conçu notamment des dispositifs électromécaniques, à électroaimant par exemple, et des dispositifs mécano-hydrauliques tels que celui représenté à la figure 1 du dessin annexé.

Ce dernier dispositif comprend, comme représenté, une came classique 1 agissant sur une soupape 2 par l'intermédiaire d'une chambre 3, fixe par rapport au moteur 4, remplie d'un liquide sous pression tel que de l'huile de graissage du moteur délivrée par une pompe à huile 5, à travers un conduit 6 équipé d'un clapet anti-retour 7.

La chambre 3 est fermée par deux pistons d'extrémité 8 et 9. Le piston 8 est normalement chargé contre la came 1 par la pression d'huile établie dans la chambre. La soupape 2 est solidaire du piston 9 et chargée contre son siège par un ressort 10, suffisamment puissant pour que la seule pression de l'huile dans la chambre 9 ne puisse provoquer une "levée" de soupape. Une électrovanne 11 à deux voies et deux positions permet de contrôler la pression d'huile dans la chambre, par mise en communication sélective de celle-ci avec une bâche 12 à l'air libre. De tels dispositifs sont bien connus et on pourra se reporter aux brevets US-A-4 133 332, US-A-4 615 306 et US-A-4 796 573 pour plus de détail les concernant.

Le fonctionnement du mécanisme représenté à la figure 1 s'établit alors comme suit : quand l'électrovanne 11 est commandée pour être dans la position représentée à la figure, la chambre 3 est isolée de la bâche 12 et le clapet anti-retour 6 empêche tout reflux d'huile vers le conduit 6. L'incompressibilité de l'huile contenue dans la chambre 3 a pour résultat de provoquer la transmission des déplacements du piston 8 sous la poussée de la came 1, au piston 9 et à la soupape 2. Celle-ci subit alors les déplacements que lui impose la came 1. Si on actionne l'électrovanne de manière à mettre en communication la chambre 3 avec la bâche 12, la pression dans cette chambre tombe et celle-ci se vide, au moins partiellement, dans la bâche quand la came 1 fait descendre le piston 8. Il n'y a plus alors transmission des déplacements du piston 8 à la soupape qui reste appliquée sur son siège en position fermée.

On comprend qu'en commandant de manière appropriée l'excitation de l'organe de déclenchement d'événement que constitue l'électrovanne 11, on peut faire varier les instants d'ouverture ou de fermeture de la soupape, le mécanisme décrit présentant un temps de réponse court compatible avec la durée des cycles de fonctionnement du moteur, même à régime élevé.

Cette commande suppose qu'un calculateur 13 associé au moteur, élabore et délivre à un autre calculateur 14, de commande de levée de soupape, une valeur de consigne $\alpha_c$ repérant, par exemple, la position angulaire du vilebrequin à laquelle un "événement soupape" commandé, tel que l'ouverture ou la fermeture de cette soupape, doit intervenir. Les véhicules automobiles modernes sont couramment équipés d'un calculateur d'allumage et/ou d'injection alimenté par des capteurs d'angle de vilebrequin $\alpha_{vil}$ et/ou de régime N du moteur, de pression P dans le collecteur d'admission du moteur, de température T du liquide de refroidissement, de position Ac de la pédale d'accélérateur etc... pour élaborer des commandes de l'angle d'avance à l'allumage A, du temps d'ouverture $t_i$ d'un injecteur de carburant etc... Un calculateur, tel celui référencé 13 à la figure 1, est donc susceptible d'élaborer à partir de certains des signaux reçus des capteurs précités, et notamment du signal représentatif du régime du moteur, la valeur de consigne $\alpha_c$ précitée repérant la position angulaire du vilebrequin à laquelle doit intervenir l'ouverture ou la fermeture de la soupape, en fonction d'une stratégie mise en mémoire dans le calculateur et exécutée par celui-ci pour ajuster la quantité d'air aspirée par un cylindre pendant le temps d'ouverture d'une soupape d'admission de ce cylindre.

Se pose alors le problème du suivi de cette valeur de consigne, élaborée par le calculateur 13 et délivrée au calculateur 14. On peut penser d'abord à assurer celle-ci par le moyen d'un dispositif de régulation en boucle fermée, avec correction proportionnelle et/ou intégrale et/ou dérivée, par exemple, comme il est bien connu. Les tentatives opérées dans ce sens ont fait apparaître que les temps de réponse introduits par l'utilisation d'une telle régulation sont trop importants pour pouvoir être tolérés, compte tenu des contraintes à respecter en matière de consommation et de pollution, dans le fonctionnement des moteurs à combustion interne, notamment lorsque ceux-ci propulsent des véhicules automobiles. En effet, on a constaté que le rattrapage de la consigne, dans le cas d'une régulation en boucle fermée, exigeait couramment un temps correspondant à la durée de plusieurs cycles moteur.

La présente invention a donc pour but de fournir un procédé de commande d'un événement concernant une soupape de cylindre de moteur à combustion interne, tel que l'ouverture ou la fermeture de cette soupape, procédé qui soit susceptible d'assurer continûment l'intervention de cet événement à un instant commandé avec précision, avec un temps de réponse faible compatible avec les contraintes en matière de consommation de carburant et de pollution qui pèsent sur le moteur à combustion interne, notamment quand celui-ci propulse un véhicule automobile.

La présente invention a aussi pour but de réaliser un dispositif pour la mise en oeuvre d'un tel procédé.

On atteint ce but de l'invention, ainsi que d'autres qui apparaîtront à la lecture de la description qui va suivre, avec un procédé de commande de la levée d'une soupape d'un cylindre de moteur à combustion interne, suivant lequel on calcule continûment une position de consigne pour un événement concernant cette soupape et on commande un organe de déclenchement de cet événement, ce procédé étant remarquable en ce que, à la détection d'un changement de la consigne ou du régime du moteur, on commande cet organe en boucle ouverte en fonction de la nouvelle consigne pendant au moins le premier cycle moteur suivant la détection du changement de consigne et on le commande ensuite en boucle fermée pour rattraper la nouvelle consigne pendant au moins un des cycles moteur suivants.

Comme on le verra plus loin, grâce à la commande initiale en boucle ouverte ainsi établie, on réduit considérablement le nombre de cycles moteur nécessaires pour rejoindre ensuite la consigne en boucle fermée. L'établissement de la nouvelle consigne étant ainsi accéléré, on réduit la durée d'existence d'écarts vis-à-vis des consignes d'ouverture et/ou de fermeture des diverses soupapes du moteur, écarts générateurs de surconsommation de carburant et de surcroît de gaz toxiques dans les gaz d'échappement du moteur.

Suivant une autre caractéristique du procédé selon l'invention, on commande l'organe de déclenchement de l'événement avec une avance sur l'événement et à chaque cycle de commande en boucle ouverte, on lit cette avance dans une table en mémoire, en fonction du régime du moteur et de la position de consigne calculée pour l'événement.

Suivant encore une autre caractéristique du procédé suivant l'invention, à l'issue de chaque phase de commande en boucle fermée, on calcule l'avance qui a permis d'atteindre la consigne et on met à jour la table d'avance avec cette nouvelle valeur d'avance.

L'invention fournit aussi un dispositif pour la mise en oeuvre du procédé selon l'invention, comprenant des moyens de calcul d'une position de consigne pour un événement concernant la soupape et des moyens de commande d'un organe de déclenchement de cet événement, remarquable en ce qu'il comprend un capteur sensible à la réalisation de l'événement, des moyens de calcul et de commande alimentés par la position de consigne déterminée par les moyens de calcul, par un signal émis par ledit capteur et par un signal représentatif du régime du moteur et/ou de la position angulaire du vilebrequin du moteur pour, lors d'au moins le premier cycle du moteur suivant une variation de la consigne ou du régime, commander en boucle ouverte l'organe de déclenchement en fonction de la nouvelle consigne et pour, lors de cycles moteur suivants, commander en boucle fermée l'annulation de l'erreur séparant la nouvelle position de la consigne de la position actuelle de l'événement telle que détectée par ledit capteur.

D'autres caractéristiques et avantages de la présente invention apparaîtront à la lecture de la description qui va suivre et à l'examen du dessin annexé dans lequel :

- la figure 1 représente schématiquement un dispositif pour la mise en oeuvre du procédé selon l'invention, déjà partiellement décrit en préambule de la présente description,
- la figure 2 représente des graphes utiles à l'explication du fonctionnement du dispositif de la figure 1, et
- la figure 3 est un organigramme du procédé de commande suivant l'invention.

On se réfère aux graphes de la figure 2 où l'on a représenté en A le graphe de la "levée" classique d'une soupape sous la seule action d'une came, en fonction de la position angulaire du vilebrequin. Sur l'axe des abscisses on a fait apparaître des points PMH et PMB qui correspondent classiquement à un point mort haut et un point mort bas, respectivement, du piston circulant dans le cylindre équipé de la soupape. C'est ainsi qu'il apparaît que la levée de la soupape prend la forme d'une cloche à maximum situé entre un PMH et un PMB successifs.

En B on a représenté le graphe d'une levée de soupape à angle d'ouverture $\alpha_o$ et à angle de fermeture $\alpha_f$ commandés. Suivant l'invention, comme cela apparaît à la figure 1, on détecte l'ouverture ou la fermeture d'une soupape à l'aide d'un capteur de position 15 d'un type quelconque, à réluctance magnétique variable ou à effet Hall par exemple, disposé à proximité de celle-ci pour être sensible à ses déplacements. Suivant l'invention encore, on définit l'angle d'ouverture $\alpha_o$ comme étant la position angulaire du vilebrequin à laquelle la levée de la soupape, telle que lue par le capteur 15, franchit un seuil de déplacement $l_{ouv}$, bas mais non nul. On filtre ainsi un certain nombre de "bruits" affectant le fonctionnement du capteur 15, du calculateur 14 qui reçoit le signal émis par le capteur et du câblage reliant l'un à l'autre.

L'angle de fermeture $\alpha_f$ est repéré de même que l'angle $\alpha_o$, par franchissement d'un seuil $l_{ferm}$ qui peut être différent de $l_{ouv}$ mais que l'on a représenté identique sur la figure 2, pour la clarté de celle-ci.

On a aussi représenté sur la figure 2 le diagramme logique EV de la commande de l'électrovanne 11, qui varie entre un état bas, dans lequel l'électrovanne est dans la position représentée a la figure 1 et un état haut où l'électrovanne met la chambre 3 en communication avec la bâche 11.

Il apparaît ainsi sur la figure 2 que, si l'on souhaite déclencher en $\alpha_o$ l'ouverture de la soupape, il faut commander le basculement de l'électrovanne à l'état bas à la position angulaire $\alpha_{cde} = \alpha_o - AV_o$, avec une avance angulaire $AV_o$ sur la position $\alpha_o$. De même la fermeture de la soupape à la position angulaire $\alpha_f$ exige une commande de l'électrovanne à la position angulaire $\alpha_{cde} = \alpha_f - AV_f$.

Ces avances à l'ouverture $AV_o$ et à la fermeture $AV_f$ résultent des temps de réponse de l'électrovanne d'une part et de la chambre 3 d'autre part.

Il s'agit donc pour le calculateur 14 de délivrer à l'électrovanne des signaux d'excitation et de désexcitation aux instants correspondant aux positions angulaires $\alpha_{cde}$ définies ci-dessus, de manière que les positions angulaires réelles $\alpha_o$ et $\alpha_f$ d'ouverture et de fermeture de la soupape respectivement correspondent à des positions angulaires de consigne $\alpha_c$ calculées par le calculateur 13 et fournies par ce dernier au calculateur 14.

Sur la figure 1, on remarquera que celui-ci comprend classiquement une électronique de calcul et de commande 16, une électronique de puissance 17, commandée par l'électronique 16 pour délivrer un signal d'énergie convenable à l'électrovanne 11, et une mémoire 18 associée à l'électronique 16 de calcul et de commande. Suivant l'invention, cette mémoire conserve des valeurs des avances $AV_o$ et $AV_f$ mentionnées ci-dessus, cartographiées en fonction de paramètres tels que le régime N du moteur et la valeur de consigne $\alpha_c$, d'ouverture ou de fermeture, calculée par le calculateur 13. Comme on le verra dans la suite, ces valeurs d'avance cartographiées sont exploitées dans les phases de commande en boucle ouverte établies par le procédé de commande suivant l'invention.

On se réfère à cet égard à l'organigramme de la figure 3 pour décrire ce procédé de commande. Au départ de l'organigramme, l'électronique de commande "lit" le régime N du moteur et la consigne actuelle $\alpha_c$, d'ouverture par exemple, telle que celle-ci a été calculée et délivrée par le calculateur 13. Le calculateur 14 exécute ensuite un premier test visant à déterminer s'il y a eu variation de la consigne, la consigne actuelle différant alors de la consigne reçue lors du cycle moteur précédent, le cycle moteur servant de base de périodicité pour la répétition des calculs. Suivant l'invention, ceux-ci sont avantageusement exécutés au moment du point mort haut qui suit l'étincelle d'allumage.

Si il n'y a pas eu de variation de la consigne $\alpha_c$, le calculateur exécute un deuxième test pour détecter une éventuelle variation du régime N.

Si l'un ou l'autre de ces deux tests est positif, c'est que des conditions existent qui sont susceptibles de faire varier l'avance $AV_o$ à l'ouverture, à utiliser pour atteindre la valeur de consigne d'ouverture. Le calculateur exécute alors un sous-programme de commande en boucle ouverte de l'électrovanne 11, pendant le premier cycle moteur ($i = 1$) suivant la détection d'une des deux variations surveillées par les tests. La première étape de ce sous-programme consiste à lire, dans la mémoire 18, la valeur de $AV_o$ qui correspond aux valeurs actuelles du régime N et de la consigne $\alpha_c$. A l'étape suivante, l'angle de commande $\alpha_{c\,de}$ l'électrovanne 11 est calculé :

$$\alpha_{cde} = \alpha_c - AV_o$$

puis comparé à la position angulaire courante $\alpha_{vil}$ du vilebrequin. Lorsque ces angles coïncident, l'électronique de puissance 17 génère un signal de commande de l'électrovanne 11. On calcule ensuite l'erreur $\Delta_{bo} = \alpha_r - \alpha_c$ à la fin de la commande en boucle ouverte, à partir de la mesure de l'angle d'ouverture réel $\alpha_r$ tirée du signal fourni par le capteur 15. Cette erreur est ensuite utilisée lors du cycle moteur suivant ($i+1=2$) comme signal d'erreur dans le cadre d'une commande en boucle fermée établie par l'électronique de commande 16.

Comme cela apparaît sur l'organigramme de la figure 3, la commande en boucle fermée s'opère, classiquement, par calcul de l'angle de commande $\alpha_{cde}$ (i) lors du cycle moteur i en fonction de l'angle de commande $\alpha_{cde}$ (i-1) et de l'erreur $\Delta$(i-1) observée pendant le cycle moteur (i-1) précédent :

$$\alpha_{cde}(i) = \alpha_{cde}(i-1) - k.\Delta(i-1)$$

k étant un coefficient, avantageusement cartographié en fonction du régime N et de la consigne $\alpha_c$.

On mesure ensuite l'erreur $\Delta$(i) entre l'angle d'ouverture réel et la consigne actuelle. Aussi longtemps que cette erreur reste supérieure à un seuil prédéterminé, la commande en boucle fermée se poursuit et les opérations décrites ci-dessus se répètent à chaque cycle moteur. On établit ainsi une régulation en boucle fermée à correction intégrale à gain variable.

Quand l'erreur $\Delta$(i) tombe en dessous de ce seuil, on estime que la consigne est atteinte et, suivant une caractéristique avantageuse de la présente invention, on calcule alors l'avance à l'ouverture correspondante :

$$AV_o = \alpha_c - \alpha_{cde}(i)$$

et on actualise la table AV = f (N, $\alpha_c$) mise en mémoire 18 avec la valeur qui vient d'être calculée.

Cette mise à jour de la table d'avance AV donne à la régulation suivant l'invention une grande robustesse. Grâce à la division de cette régulation en deux étapes (une boucle ouverte puis une boucle fermée) on assure l'auto-apprentissage de l'avance AV appliquée en boucle ouverte grâce à la boucle fermée ultérieure. La boucle ouverte permet de s'approcher de la consigne dès le premier cycle de calcul, jusque dans une zone de linéarité ou la régulation intégrale en boucle fermée est plus efficace.

Bien entendu l'invention n'est pas limitée au mode de réalisation décrit et représenté qui n'a été donné qu'à titre d'exemple. Ainsi, on pourra étendre la commande en boucle ouverte sur deux cycles moteur ou plus, à l'appréciation de l'homme de métier. La commande de l'angle d'ouverture de la soupape décrite ci-dessus s'étend sans difficulté à la commande de l'angle de fermeture ou à tout autre angle d'événements caractéristiques de cette soupape, tel que celui du passage par la levée maximum. Egalement, les fonctions des deux calculateurs 13 et 14 pourraient être exécutées par un calculateur unique, convenablement programmé à cet effet.

On notera encore, incidemment, que le capteur 15 permet d'identifier l'état (ouverture ou fermeture) de la soupape à laquelle il est associé. Cette information, transmise au calculateur 14 peut aussi être utilisée par le calculateur 13 pour reconnaître la position du moteur dans un cycle (2 tours moteur par cycle dans un moteur à 4 temps). Ainsi par exemple, si on détecte un signal d'ouverture d'une soupape d'admission du cylindre 1 d'un moteur à quatre cylindres par exemple, on peut en déduire l'état (compression, explosion et détente, échappement) des autres cylindres No. 2, 3, 4. On évite ainsi d'avoir à disposer pour ce but un capteur de position angulaire à côté d'une des cames actionnant les soupapes, ou un capteur de pression dans un des cylindres du moteur, par exemple.

## Revendications

1. Procédé de commande de la levée d'une soupape d'un cylindre de moteur à combustion interne, suivant lequel on calcule continûment une position de consigne ($\alpha_c$) pour un événement concernant cette soupape et on commande un organe de déclenchement de cet événement, caractérisé en ce que, à la détection d'un changement de la consigne ($\alpha_c$) ou du régime (N) du moteur, a) on commande l'organe de déclenchement en boucle ouverte en fonction de la nouvelle consigne pendant au moins le premier cycle moteur suivant la détection du changement de consigne et b) on commande ensuite cet organe en boucle fermée pour rattraper la nouvelle consigne pendant des cycles moteur suivants.

2. Procédé conforme à la revendication 1, caractérisé en ce qu'on commande l'organe de déclenchement de l'événement avec une avance (AV) sur l'événement et en ce qu'à chaque cycle de commande en boucle ouverte, on lit cette avance dans une table en mémoire, en fonction du régime (N) du moteur et de la position de consigne ($\alpha_o$) calculée pour l'événement.

3. Procédé conforme à la revendication 2, caractérisé en ce que, à l'issue de chaque phase de commande en boucle fermée, on calcule l'avance (AV) qui a permis d'atteindre la consigne ($\alpha_c$) et on met à jour la table d'avance avec cette nouvelle valeur d'avance.

4. Dispositif pour la mise en oeuvre du procédé conforme à la revendication 1, comprenant des moyens (13) de calcul d'une position de consigne ($\alpha_c$) pour un événement concernant la soupape, des moyens de commande (14) d'un organe de déclenchement (11) de cet événement, un capteur (15) sensible à la réalisation de l'événement, des moyens (14) de calcul et de commande alimentés par la position de consigne ($\alpha_c$) déterminée par les moyens (13) et par un signal émis par ledit capteur (15) caractérisé en ce que les moyens de calcul sont en outre alimentés par un signal représentatif du régime (N) et/ou de la position angulaire du vilebrequin ($\alpha_{vil}$) du moteur et sont programmés pour lors d'au moins le premier cycle moteur suivant une variation de la consigne ou du régime, commander en boucle ouverte l'organe de déclenchement en fonction de la nouvelle consigne et pour, lors de cycles moteur suivants, commander en boucle fermée l'annulation de l'erreur séparant la nouvelle position de la nouvelle consigne de la position actuelle de l'événement telle que détectée par ledit capteur (15).

5. Dispositif conforme à la revendication 4, caractérisé en ce que l'organe de déclenchement (11) de l'événement est commandé par les moyens (14) de calcul et de commande avec une avance (AV), lesdits moyens (14) comprenant une mémoire (18) interrogée lors de la commande en boucle ouverte de l'événement pour fournir l'avance (AV) à prendre en compte, en fonction du régime (N) actuel du moteur et de la consigne actuelle ($\alpha_c$) de la position de l'événement.

6. Dispositif conforme à la revendication 5, caractérisé en ce qu'il comprend des moyens pour mettre à jour la mémoire (18) avec des valeurs de l'avance (AV) établies en fin de phase de commande en boucle fermée de la position de l'événement.

7. Dispositif conforme à l'une quelconque des revendications 4 à 6, caractérisé en ce que l'événement commandé est l'instant d'ouverture ou de fermeture de la soupape.

8. Dispositif conforme à la revendication 7, caractérisé en ce que la soupape commandée est une soupape d'admission.

9. Dispositif conforme à l'une quelconque des revendications 5 à 8, caractérisé en ce que la soupape est fixée sur un piston (9) fermant une extrémité d'une chambre (3) dont l'autre extrémité est fermée par un deuxième piston (8) en appui contre une came (1), la chambre étant remplie d'un fluide incompressible, l'organe de déclenchement étant constitué par une électrovanne (11) établissant sélectivement une communication entre la chambre (3) et une bâche (12) sous la commande d'une électronique (16) de commande et à travers une électronique de puissance formant partie des moyens de calcul (14).

**Patentansprüche**

1. Verfahren zum Steuern des Hubes eines Ventils für einen Zylinder eines Verbrennungsmotors, bei dem eine Sollwertstellung ($\alpha_c$) für ein dieses Ventil betreffendes Ereignis kontinuierlich berechnet und ein Stellglied zum Auslösen dieses Ereignisses gesteuert wird. dadurch gekennzeichnet, daß bei Feststellung einer Änderung des Sollwertes ($\alpha_c$) oder der Drehzahl (N) des Motors (a) das Stellglied einer Steuerung in einer offenen Schleife in Abhängigkeit von dem neuen Sollwert während mindestens des ersten Motorzyklus nach Feststellung der Änderung des Sollwertes unterzogen wird und (b) anschließend dieses Stellglied einer Steuerung in geschlossener Schleife zum Nachstellen des neuen Sollwertes während der folgenden Motorzyklen unterzogen wird.

2. Verfahren nach Anspruch 1, dadurch gekennzeichnet, daß das Stellglied zum Auslösen des Ereignisses mit einer Voreilung (AV) zu dem Ereignis gesteuert wird und daß bei jedem Zyklus einer Steuerung in offener Schleife diese Voreilung in eine Speichertabelle in Abhängigkeit von der Drehzahl (N) des Motors und der für das Ereignis berechneten Sollwertstellung ($\alpha_c$) eingelesen wird.

3. Verfahren nach Anspruch 2, dadurch gekennzeichnet, daß bei Beginn jeder einer Steuerung in geschlossener Schleife die Voreilung (AV), bei der der Sollwert ($\alpha_c$) erreicht werden konnte, berechnet wird und die Voreilungstabelle mit diesem neuen Voreilwert aktualisiert wird.

4. Vorrichtung zum Durchführen des Verfahrens nach Anspruch 1, mit Mitteln (13) zum Berechnen einer Sollwertstellung ($\alpha_c$) für ein das Ventil betreffendes Ereignis, Steuermitteln (14) zum Steuern eines Stellgliedes (11) zum Auslösen dieses Ereignisses, einem Fühler (15), der auf die Realisierung des Ereignisses anspricht, Rechner- und Steuermitteln (14), die mit der von den Mitteln (13) bestimmten Sollwertstellung ($\alpha_c$) und mit einem von dem Fühler (15) abgegebenen Signal beschickt werden, dadurch gekennzeichnet, daß die Rechnermittel außerdem mit einem Signal beschickt werden, das die Drehzahl (N) und/oder die Winkelstellung der Kurbelwelle ($\alpha_{vil}$) des Motors darstellen und so programmiert sind, daß zumindest während des ersten Motorzyklus nach einer Änderung des Sollwertes oder der Drehzahl das Stellglied in Abhängigkeit von dem neuen Sollwert einer Steuerung in offener Schleife unterzogen wird und während der folgenden Motorzyklen der Fehler, der die neue Stellung des neuen Sollwertes von der durch den Fühler (15) bestimmten Ist-Stellung des Ereignisses trennt, durch eine Stellung in geschlossener Schleife korrigiert wird.

5. Vorrichtung nach Anspruch 4, dadurch gekennzeichnet, daß das Stellglied (11) zum Auslösen des Ereignisses durch die Rechner- und Steuermittel (14) mit einer Voreilung (AV) gesteuert wird, wobei diese Mittel (14) einen Speicher (18) umfassen, der bei Steuerung des Ereignisses in offener Schleife abgefragt wird, um die zu berücksichtigende Voreilung (AV) in Abhängigkeit von der Ist-Drehzahl (N) des Motors und dem Ist-Sollwert ($\alpha_c$) der Stellung des Ereignisses zu liefern.

6. Vorrichtung nach Anspruch 5, gekennzeichnet durch Mittel zum Aktualisieren des Speichers (18) mit den Voreilwerten (AV), die am Ende der Phase einer Steuerung der Stellung des Ereignisses in geschlossener Schleife ermittelt werden.

7. Vorrichtung nach einem der Ansprüche 4 bis 6, dadurch gekennzeichnet, daß das gesteuerte Ereignis der Zeitpunkt des Öffnens oder Schließens des Ventils ist.

8. Vorrichtung nach Anspruch 7, dadurch gekennzeichnet, daß das gesteuerte Ventil ein Einlaßventil ist.

9. Vorrichtung nach einem der Ansprüche 5 bis 8, dadurch gekennzeichnet, daß das Ventil an einem Kolben (9) befestigt ist, der ein Ende einer Kammer (3) verschließt, dessen anderes Ende von einem an einem Nocken (1) anliegenden zweiten Kolben (8) verschlossen wird, wobei die Kammer mit einem inkompressiblen Fluid gefüllt ist, das Stellglied von einem Magnetventil (11) gebildet wird, das unter der Steuerung einer Steuerelektronik (16) sowie über eine Leistungselektronik, die einen Teil der Rechnermittel (14) bildet, wahlweise eine Verbindung zwischen der Kammer (3) und einem Reservoir (12) herstellt.

## Claims

1. Method for controlling the valve lift in a cylinder of an internal-combustion engine, according to which method a reference position ($\alpha_{ref}$) for an event regarding this valve is continuously calculated and a member that triggers this event is controlled, characterized in that, when a change in reference value ($\alpha_{ref}$) or engine speed (N) is detected, a) the triggering member is controlled in an open loop as a function of the new reference value during at least the first engine cycle following the detection of the change in reference value, and b) this member is thereafter controlled in a closed loop in order to get back to the new reference value during the following engine cycles.

2. Method in accordance with Claim 1, characterized in that the member that triggers the event is controlled with an advance (AV) on the event and in that upon each open-loop control cycle, this advance is read from a table stored in memory as a function of the engine speed (N) and of the calculated reference position ($\alpha_{ref}$) for the event.

3. Method in accordance with Claim 2, characterized in that, on completion of each closed-loop control phase, the advance (AV) that allowed the reference value ($\alpha_{ref}$) to be achieved is calculated, and the advance table is updated using this new value of the advance.

4. Device for the implementation of the method in accordance with Claim 1, comprising means (13) for calculating a reference position ($\alpha_{ref}$) for an event regarding the valve, means (14) of controlling a member (11) that triggers this event, a sensor (15) sensitive to the achieving of the event, calculation and control means (14) fed with the reference position ($\alpha_{ref}$) determined by the means (13) and with a signal emitted by the said sensor (15), characterized in that the calculation means are also fed with a signal which represents the engine speed (N) and/or the angular position ($\alpha_{crank}$) of the engine crankshaft and are programmed so that during at least the first engine cycle following a variation in reference value or speed, they control the triggering member in open loop as a function of the new reference value and so that during subsequent engine cycles, they use closed-loop control to cancel out the error that separates the new position of the new reference value from the current position of the event as detected by the said sensor (15).

5. Device in accordance with Claim 4, characterized in that the member (11) that triggers the event is controlled by the calculation and control means (14) with an advance (AV), the said means (14) including a memory (18) which is interrogated during the open-loop control of the event in order to provide the advance (AV) to be taken into account, as a function of the current engine speed (N) and of the current reference value ($\alpha_{ref}$) for the position of the event.

6. Device in accordance with Claim 5, characterized in that it comprises means for updating the memory (18) with the values of advance (AV) formulated at the end of the phase of closed-loop control of the position of the event.

7. Device in accordance with any one of Claims 4 to 6, characterized in that the controlled event is the moment that the valve opens or closes.

8. Device in accordance with Claim 7, characterized in that the valve controlled is an inlet valve.

9. Device in accordance with any one of Claims 5 to 8, characterized in that the valve is fixed to a piston (9) closing one end of a chamber (3), the other end of which is closed by a second piston (8) resting against a cam (1), the chamber being filled with an incompressible fluid, the triggering member consisting of a solenoid valve (11) which selectively establishes a communication between the chamber (3) and a tank (12) under the control of control electronics (16) and via power electronics which form part of the calculation means (14).

FIG.:1

FIG.:2

FIG.:3